# EUROPEAN PATENT SPECIFICATION

(11) **EP 2 874 769 B1**
(45) Date of publication and mention of the grant of the patent: **13.12.2017**
(21) Application number: 13819894.0
(22) Date of filing: 14.06.2013
(51) Int. Cl.: B22F 3/16, B22F 3/105, B29C 67/00

(54) **FUNCTIONALLY GRADED ADDITIVE MANUFACTURING WITH IN SITU HEAT TREATMENT**
FUNKTIONSANGEPASSTE ZUSATZSTOFFHERSTELLUNG MIT IN-SITU-WÄRMEBEHANDLUNG
FABRICATION D'UN ADDITIF À GRADATION FONCTIONNELLE AVEC UN TRAITEMENT THERMIQUE IN SITU

(30) Priority: 18.07.2012 US 201261673116 P; 25.09.2012 US 201213626239
(43) Date of publication of application: 27.05.2015
(73) Proprietor: Aerojet Rocketdyne of DE, Inc., Canoga Park, CA 91309 (US)
(72) Inventor: LANDAU, Joel G., Canoga Park, California 91304 (US)
(74) Representative: Hull, James Edward
(86) International application number: PCT/US2013/045833
(87) International publication number: WO 2014/014589

(56) References cited:
- EP-A2- 1 946 908
- WO-A2-2006/131716
- JP-A- 2009 006 509
- US-A- 6 042 774
- US-A1- 2006 157 454
- US-A1- 2009 020 901
- US-A1- 2009 020 901
- US-A1- 2009 130 449
- US-A1- 2009 130 449

## Description

### BACKGROUND

Powder bed additive manufacturing processes are known. In one known process, a layer of powdered particles is dispensed into a chamber, and an initial portion, or cross section, of a component is formed by fusing selected particles together. Then, a base is lowered, and another layer of powered particles is dispensed into the chamber. These powdered particles are selectively fused to the initial layer of fused particles, and the process repeats itself until the component is formed. EP1946908 discloses an apparatus and a method for creating three-dimensional solid objects through layer-by-layer build-up of radiation-solidifiable build material. WO2006/131716 discloses a process for fabricating a composite functional body by selective laser melting.

### BRIEF DESCRIPTION OF THE DRAWINGS

The drawings can be briefly described as follows:
Figure 1 illustrates an example process for producing a component.
Figure 2 schematically illustrates an example additive manufacturing machine.
Figure 3 illustrates detail of the process of Figure 1.
Figures 4A-4H schematically illustrate the steps in the processes illustrated in Figures 1 and 3.

### DETAILED DESCRIPTION

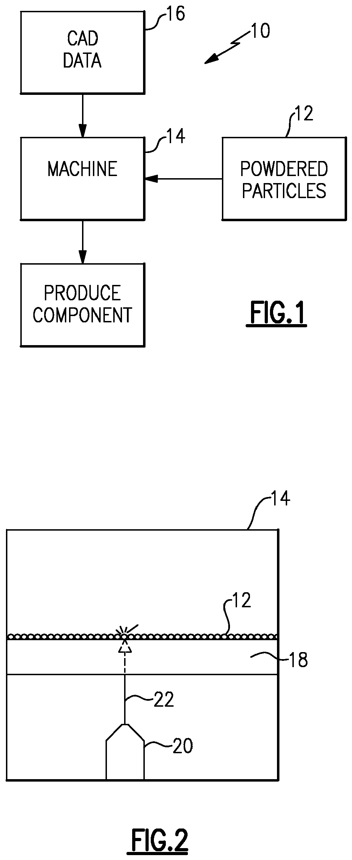

Present invention concerns a manufacturing process according to appended claims 1 and 2. Figure 1 illustrates an example additive manufacturing process 10. The process 10 can be used to form components having complex geometries, such as complex internal passages, that would be otherwise relatively difficult or impossible to produce using conventional, subtractive processing techniques. Examples of such components include components for rocket engines or gas turbine engines, however this disclosure is not limited to any particular component type. Further, this disclosure is not limited components made of a particular material type, and extends to components made from metal, polymers, ceramics, etc.

With further reference to Figure 1, powdered particles 12 used for forming a component are provided within a machine 14. With respect to computer aided drafting (CAD) data 16, which represents a particular component geometry, a component is formed using additive manufacturing techniques, which will be explained in detail below.

Figure 2 schematically illustrates an example additive manufacturing machine 14. In the example, the powdered particles 12 are provided on an upper side, relative to the orientation of Figure 2, of an at least partially translucent table 18. An energy beam source 20, which is configured to emit an energy beam 22, is provided on a lower side of the table 18. Example energy beams include lasers and electron beams.

The table 18 is made of a solid material which is at least partially translucent such that at least a portion, such as some wavelengths, of the energy beam 22 can pass through the table 18. This disclosure is not limited to any specific material type for the table 18, and a worker in this art can select a material having desired properties. Example materials include quartz, silicon nitride (SiN), aluminum silicon nitride (AlSiN), polymers, ceramics, and other strong and partially translucent materials.

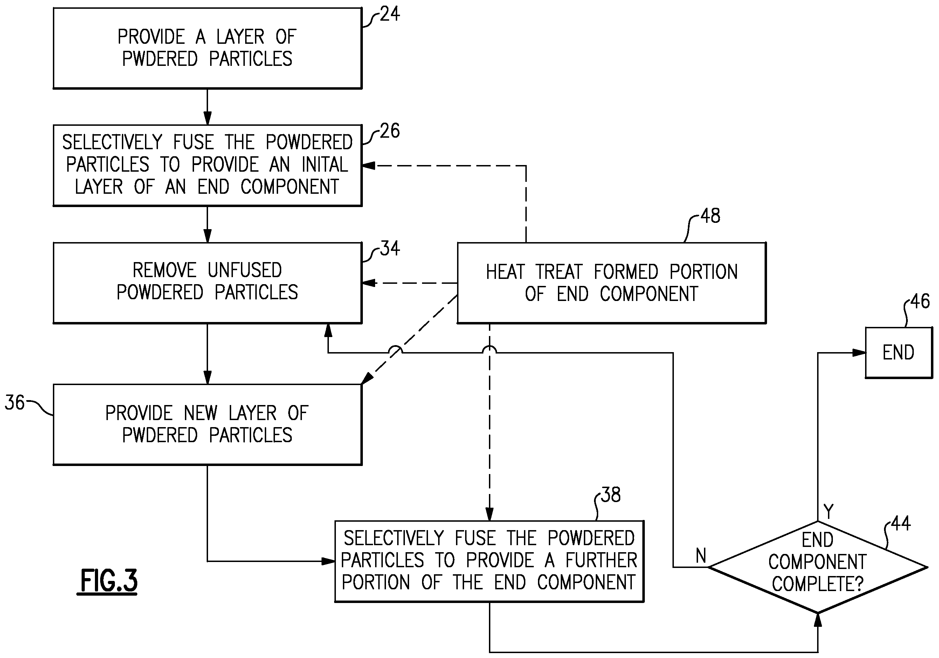

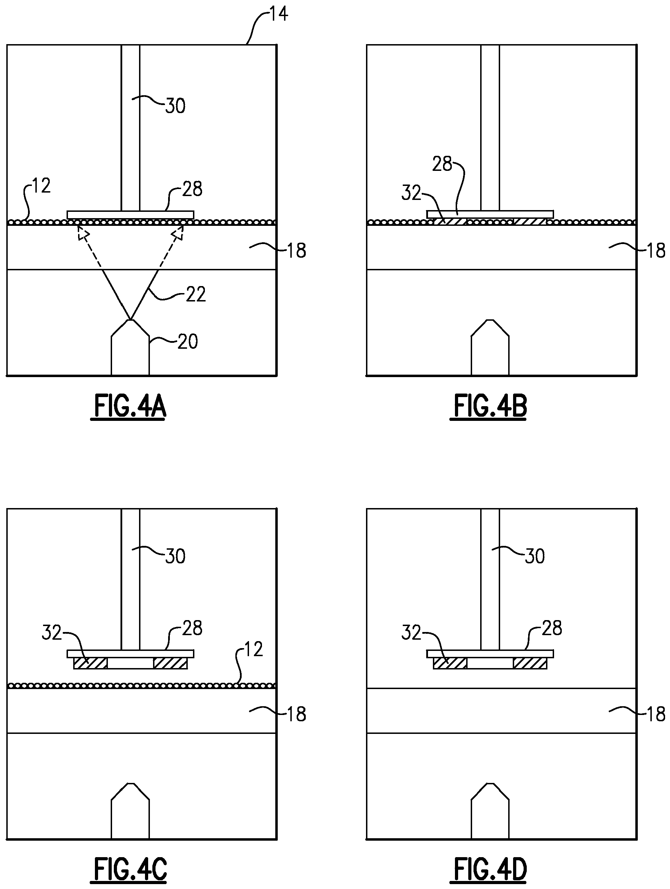

With continued reference to Figure 2, and also with reference to Figures 3 and 4A-4H, an example method for forming a component is described. Initially, at 24, a first layer of powdered particles 12 is provided on an upper side of the table 18, as illustrated in Figure 2. As represented in Figure 4A, the energy beam 22 is activated, at 26, and selectively melts certain of the powdered particles 12 and a base 28 based at least in part with the CAD data 16. The base 28 is disposed in close proximity to the powdered particles 12 such that the melting process creates a micro-weld pool of material consisting of both the powder and at least a portion of the base 28. Upon cooling, the combined micro-weld pool fuses into a single unitary part.

In the illustrated example of Figure 4A, a base 28 is within the additive manufacturing machine. The base 28 is movable relative to the table 18 by way of a lifting mechanism 30. In this example, the base is positioned in close proximity to the powdered particles 12 during melting and fusing, and thus the powdered particles 12 are fused to the base 28.

As illustrated in Figure 4B, a first cross section 32, which provides an initial portion of an end-use component (or part), has been fused to the base 28. In Figure 4C, the base 28 and first cross section 32 are lifted relative to the table 18, by way of the lifting mechanism 30, and the powdered particles 12 are removed, at 34, as illustrated in Figure 4D. The removed, unfused powdered particles can be recycled and used to form a subsequent portion of the end-use component, if desired.

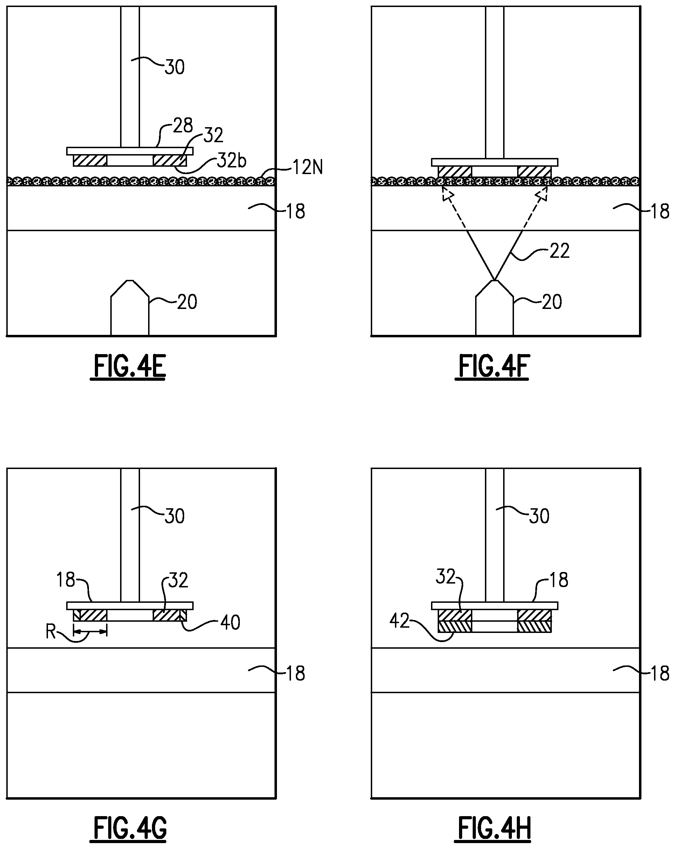

At 36, a new layer of powdered particles 12N is provided onto the upper surface of the table 18, as illustrated in Figure 4E. The new layer of powder particles 12N are optionally of a different chemical composition from the initial layer of particles 12 provided in Figure 4A. This provides the option of forming the end-use component with a multi- composition, or functionally graded cross section. As is known in this art, functionally graded components change in composition (e.g., in chemical composition) in a particular direction, for example, thickness. Functionally graded components are discussed in U.S. Patent No. 5,112,146 to Stangeland.

As illustrated in Figure 4F, the base 28 may be lowered such that the first cross section 32 is disposed in close proximity with the additional powdered particles 12N, thereby enabling the additional powdered particles 12N to be selectively fused, at 38, to the first cross section 32. In this embodiment the additional particles 12N provide the end-use component with an increased radial dimension R (by way of the added thickness 40) relative to the first cross section 32, as illustrated in Figure 4G. The end-use component would thus have a functionally graded cross section. This process can be repeated, as desired, to provide the end-use component with desired properties. In one example, this process can be used to provide one side of the component with a relatively hard material, and the other side with a relatively strong material, which can lead to reduced cracking in the end-use component.

In another example, the additional particles 12N added at step 36 are fused to a bottom surface 32b of the first cross section 32, as shown in Figure 4H, to add to the axial or vertical dimension of the end-use component. In Figure 4H, the additional particles need not have a different chemical composition from the initial particles 12. However, it is possible to use different materials between axial layers of the end-use component, as desired. The steps illustrated across Figures 4A-4H can be repeated as desired until the component is completed, as represented at 44 and 46.

In the above-described process, the exterior of the formed portion of the end-use component will be exposed throughout the process, whereas the formed portion of the end-use component in a typical additive manufacturing process would be buried in unfused powdered particles. Accordingly, in the disclosed example, it is possible to heat treat the formed portion of the end-use component, at 48, as desired throughout the manufacturing process. The heat treatment may be accomplished by defocusing the laser and radiating the exposed geometries of the part with periodic and/or continuous energy. Additional heat treat methods may include inductive heating, resistive heating, convection heating and other type of heating. This heat treatment can be characterized as "in situ," because it can take place during other manufacturing steps. One contemplated heat treatment is annealing, wherein the end-use component is heated above a critical temperature, maintained at a suitable temperature, and then cooled. Given the above, components can be formed using different material types, to provide the end-use component with desired properties, including a functionally graded cross section. The components can further be heat treated, during machining, which saves time and other expenses relative to conventional techniques. Again, this disclosure, by virtue of employing an additive manufacturing technique, can further provide parts with relatively complex geometries.

## Claims

1. A manufacturing process comprising:
adding a layer of a first powder (12) to a table (18), the table (18) made of a translucent material;
disposing an external cross section of a partially formed part in proximity with the layer of the first powder (12);
selectively melting the first powder (12) to fuse with the partially formed part, wherein the melting process creates a micro-weld pool of material consisting of both the first powder and at least a portion of the partially formed part, which, upon cooling, fuses into a single unitary part, thereby providing the partially formed part with a new external cross section (32);
lifting the part above the remainder of the layer of the first powder (12);
removing the remainder of the layer of the first powder (12) from the table (18);
adding a layer of a second powder (12N) to the table (18), wherein the second powder (12N) has a chemical composition different than the first powder (12);
disposing the new external cross section of the partially formed part in proximity with the layer of the second powder (12N); and
selectively melting the second powder (12N) to fuse with the partially formed part.

2. The manufacturing process as recited in claim 1, further comprising heat treating the part with diffuse laser incidence during the adding, disposing and selectively melting steps.

## Patentansprüche

1. Herstellungsverfahren, umfassend:
Hinzufügen einer Schicht eines ersten Pulvers (12) auf einen Tisch (18), wobei der Tisch (18) aus einem transluzenten Material gefertigt ist;
Anordnen eines äußeren Querschnitts eines teilweise ausgebildeten Teils in der Nähe der Schicht des ersten Pulvers (12);
selektives Schmelzen des ersten Pulvers (12), um mit dem teilweise ausgebildeten Teil zu verschmelzen, wobei das Schmelzverfahren ein Mikroschweißbad von Material, das aus sowohl dem ersten Pulver als auch mindestens einem Abschnitt des teilweise ausgebildeten Teils besteht, erzeugt, das beim Abkühlen in ein einziges einheitliches Teil verschmilzt, wodurch das teilweise ausgebildete Teil mit einem neuen äußeren Querschnitt (32) versehen wird;
Anheben des Teils über den Rest der Schicht des ersten Pulvers (12);
Entfernen des Rests der Schicht des ersten Pulvers (12) von dem Tisch (18);
Hinzufügen einer Schicht eines zweiten Pulvers (12N) auf den Tisch (18), wobei das zweite Pulver (12N) eine von dem ersten Pulver (12) unterschiedliche chemische Zusammensetzung hat;
Anordnen des neuen äußeren Querschnitts des teilweise ausgebildeten Teils in der Nähe der Schicht des zweiten Pulvers (12N); und
selektives Schmelzen des zweiten Pulvers (12N), um mit dem teilweise ausgebildeten Teil zu verschmelzen.

2. Herstellungsverfahren nach Anspruch 1, ferner umfassend Wärmebehandeln des Teils mit diffusem Lasereinfall während der Hinzufüge-, Anordne- und selektiven Schmelzschritte.

## Revendications

1. Processus de fabrication comprenant :
l'ajout d'une couche d'une première poudre (12) à une table (18), la table (18) étant faite d'une matière translucide ;
la disposition d'une section transversale externe d'une partie partiellement formée à proximité de la couche de la première poudre (12) ;
la fusion sélective de la première poudre (12) pour fusionner avec la partie partiellement formée, dans lequel le processus de fusion crée une flaque microsoudée de matière consistant tant en la première poudre qu'en au moins une portion de la partie partiellement formée, qui, lors du refroidissement, fusionne en une partie unitaire simple, munissant de ce fait la partie partiellement formée d'une nouvelle section transversale externe (32) ;
le levage de la partie au-dessus du reste de la couche de la première poudre (12) :
l'enlèvement du reste de la couche de la première poudre (12) depuis la table (18) ;
l'ajout d'une couche d'une seconde poudre (12N) à la table (18), dans lequel la seconde poudre (12N) a une composition chimique différente de la première poudre (12) ;
la disposition de la nouvelle section transversale externe de la partie partiellement formée à proximité de la couche de la seconde poudre (12N) ; et
la fusion sélective de la seconde poudre (12N) pour fusionner avec la partie partiellement formée.

2. Processus de fabrication selon la revendication 1, comprenant en outre le traitement thermique de la partie avec une incidence laser diffuse pendant les étapes d'ajout, de disposition et de fusion sélective.
